# FASCICULE DE BREVET EUROPEEN

(11) **EP 1 546 549 B1**
(45) Date de publication et mention de la délivrance du brevet: **14.11.2012**
(21) Numéro de dépôt: 03773816.8
(22) Date de dépôt: 02.10.2003
(51) Int. Cl.: F03B 3/12

(54) **ROUE DE TYPE FRANCIS**
FRANCIS-WASSERTURBINE
FRANCIS TURBINE

(30) Priorité: 02.10.2002 FR 0212199
(43) Date de publication de la demande: 29.06.2005
(73) Titulaire: Alstom Hydro France, 92300 Levallois Perret (FR)
(72) Inventeur: BAZIN, Danièle, F-38500 SAINT NICOLAS DE MACHERIN (FR); COUSTON, Michel, Henri, F-38180 SEYSSINS (FR)
(74) Mandataire: Myon, Gérard Jean-Pierre
(86) Numéro de dépôt international: PCT/FR2003/002894
(87) Numéro de publication internationale: WO 2004/031574

(56) Documents cités:
- WO-A-02/42638
- FR-A- 2 052 248
- GB-A- 237 963
- US-A- 4 479 757
- US-A- 4 519 746
- US-A- 6 068 446
- US-A1- 2001 007 634
- H. BREKKE: "Why not make the turbines cavitation free?" PROC. INT. CONF. ON HYDROPOWER, vol. 3, 1997, pages 1925-1934, XP008017906 Atlanta US

## Description

L'invention a trait à une roue de type Francis et à une turbine équipée d'une telle roue.

Les roues de type Francis peuvent équiper différentes sortes de machines hydrauliques, telles que des turbines, des pompes ou des turbines-pompes, voir le document US - A - 4 479 757. Elles comprennent des aubes réparties autour d'un arbre central de rotation et qui définissent entre elles des conduits d'écoulement d'eau. Dans le cas des turbines, la géométrie des aubes de ces roues est définie pour que l'écoulement de l'eau induise un couple de rotation sur la roue. La puissance que peut délivrer une turbine équipée d'une telle roue dépend de sa géométrie, tout particulièrement de son diamètre, en liaison avec sa vitesse de rotation.

Dans certaines configurations d'une machine hydraulique Francis, le diamètre de la roue est imposé, notamment en cas de réhabilitation d'une installation où le diamètre ne peut pas être modifié sans d'importants travaux de génie civil.

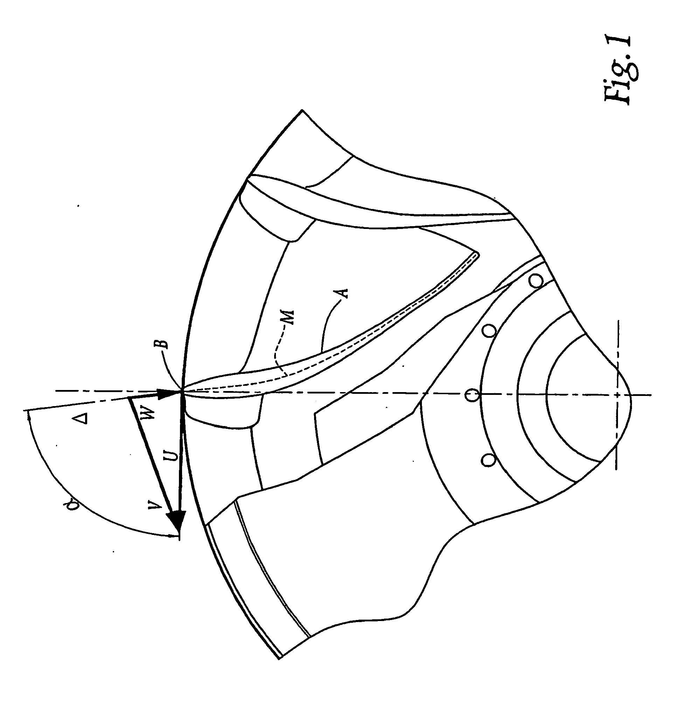

Dans le cas d'une turbine Francis classique, représentée partiellement en vue de dessus et avec arrachement partiel à la figure 1, la vitesse V d'injection de l'eau se décompose en une vitesse linéaire U du bord d'attaque B d'une aube A de turbine et une vitesse relative W du jet d'eau par rapport à l'aube A. Dans ces conditions, il est habituel de concevoir une roue de turbine Francis pour que la fibre moyenne M de chaque aube soit orientée selon une droite Δ faisant un angle α inférieur à 90° par rapport à la vitesse linéaire d'avance U de son bord d'attaque B.

Il est envisagé, dans l'article « Why not make the turbines cavitation free » de Monsieur Brekke (Proceedings of International Conférence on Hydropower vol 3, 1997) différentes orientations pour le bord d'attaque des aubes d'une roue de turbine Francis.

Cependant, notamment en cas de réhabilitation, les conditions d'utilisation de la turbine peuvent être modifiées, notamment par diminution de la vitesse de rotation et/ou augmentation de la hauteur de chute, auquel cas l'orientation du bord d'attaque des aubes n'est plus compatible avec l'angle d'incidence du jet d'eau. Dans ce cas, il se crée des tourbillons et/ou des phénomènes de cavitation à proximité des surfaces intrados et extrados des aubes, ce qui diminue le rendement de la machine hydraulique et favorise les phénomènes d'usure.

C'est à ces inconvénients qu'entend plus particulièrement remédier l'invention en proposant une nouvelle roue Francis pouvant fonctionner de façon satisfaisante dans les nouvelles conditions d'utilisation définies.

Dans cet esprit, l'invention concerne une roue de type Francis qui comprend un plafond, une ceinture et des aubes, s'étendant entre ce plafond et cette ceinture, ces aubes définissant entre elles des conduits d'écoulement de liquide. Cette roue est caractérisée en ce que le rapport de l'épaisseur maximum de chaque aube sur la longueur développée moyenne de sa fibre moyenne est compris entre 0,1 et o,2 alors que, au niveau du bord d'attaque de cette aube, la fibre moyenne est orientée, sur sensiblement toute la hauteur du bord d'attaque, selon une droite faisant un angle (α) supérieur à 90° par rapport à la vitesse linéaire d'avance du bord d'attaque de l_{'}aube dans le sens de rotation de la roue.

Grâce à l'invention, la combinaison de l'orientation particulière du bord d'attaque et de l'épaisseur maximum de l'aube permet un fonctionnement sans création de tourbillons ou phénomènes de cavitation gênants.

Selon d'autres aspects avantageux de l'invention, cette roue incorpore une ou plusieurs des caractéristiques suivantes :
- Le rapport précité est supérieur à 0,13 et, de préférence, supérieur à 0,15.
- L'angle moyen entre la vitesse linéaire de progression d'une aube au niveau de son bord d'attaque et la fibre moyenne de cette aube au niveau de ce bord est compris entre 110° et 140°.
- Chaque aube est formée d'une peau constituant ses faces latérales et définissant un volume interne creux de l'aube. Une telle structure permet d'envisager la création d'aubes relativement épaisses sans que leur masse ne soit trop importante et sans que leur prix de revient en matière ne soit trop élevé. Dans ce cas, la peau peut être métallique ou réalisée en matière composite. On peut également prévoir que la peau est formée par assemblage de deux plaques constituant respectivement l'intrados et l'extrados de l'aube. Selon un aspect avantageux, le volume interne de l'aube peut être garni d'un matériau de remplissage.

L'invention concerne également une turbine hydraulique de type Francis qui comprend une roue telle que précédemment décrite.

L'invention sera mieux comprise et d'autres avantages de celle-ci apparaîtront plus clairement à la lumière de la description qui va suivre d'un mode de réalisation d'une roue de turbine Francis conforme à son principe, donnée uniquement à titre d'exemple et faite en référence aux dessins annexés dans lesquels :
- la figure 2 est une vue, en perspective et avec arrachement partiel, d'une roue de turbine Francis conforme à l'invention ;
- la figure 3 est une vue analogue à la figure 1 pour la turbine de la figure 2 et
- la figure 4 est une coupe transversale de principe, à plus grande échelle, d'une aube de la roue des figures 2 et 3.

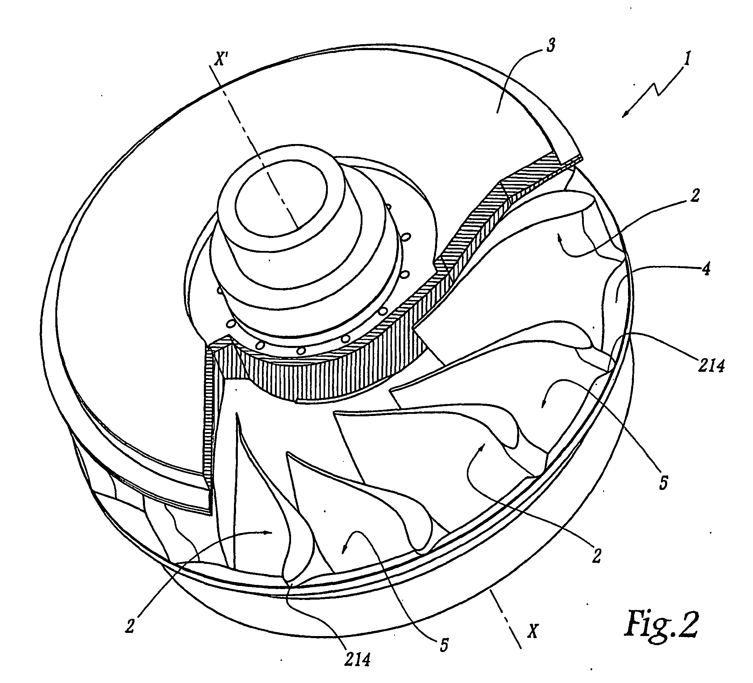

La roue 1 représentée aux figures 2 à 4 comprend des aubes 2 identiques et réparties autour d'un axe central X-X' de rotation de la roue 1. Un plafond 3 est prévu en partie supérieure de la roue 1, alors qu'une ceinture 4 borde la partie inférieure, radiale et externe des aubes 2. Un conduit d'écoulement 5 est ainsi défini entre chaque paire de deux aubes 2 adjacentes, ce conduit étant bordé par le plafond 3 et la ceinture 4.

On note 21 le bord d'attaque d'une aube 2. On note 22 son bord de fuite. On définit la fibre moyenne 23 de l'aube 2 comme étant, dans chaque plan transversal de cette aube, une courbe située à égale distance de la face d'intrados 24 et de la face d'extrados 25 de l'aube 2.

On note L la longueur moyenne de cette fibre 23, cette moyenne étant prise comme égale à la demi-somme de la longueur de la fibre moyenne d'une aube 2 au niveau du plafond 3 et au niveau de la ceinture 4.

On note e l'épaisseur maximum de l'aube 2.

La géométrie de l'aube 2 est choisie de telle sorte que le rapport e/L est compris entre 0,1 et 0,2, c'est-à-dire que e représente entre 10 et 20% de L.

Des essais concluants ont été conduits avec des valeurs de e/L comprises entre 0,13 et 0,18. En particulier, une roue avec un rapport e/L égal à environ 0,16 fonctionne de façon très satisfaisante.

En outre, la géométrie de l'aube 2 est telle que, au voisinage du bord d'attaque 21, la fibre neutre 23 s'étend selon une droite Δ₂₃ faisant un angle α supérieur à 90° par rapport à la vitesse linéaire d'avance U du bord d'attaque 21.

L'angle α a une valeur moyenne sur la hauteur du bord 21. comprise entre 110° et 140°, avec de préférence une valeur maximum inférieure à 150°.

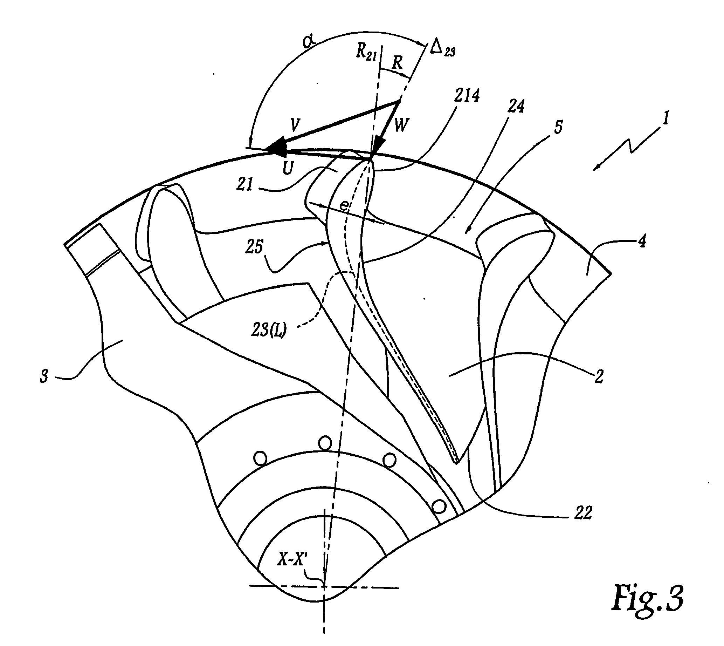

La configuration représenté à la figure 3 est celle qui prévaut sur l'essentiel de la hauteur du bord d'attaque 21 entre son point d'attache sur le plafond 3 et son point d'attache 214 sur la ceinture 4.

En d'autres termes, au niveau du bord d'attaque 21, la fibre moyenne 23 orientée du bord de fuite 22 vers le bord d'attaque 21 se prolonge dans la direction de la droite Δ₂₃ qui, par rapport à un rayon R₂₁ de la roue 1 passant par le bord d'attaque 21, est opposée à la vitesse linéaire U de progression du bord 21. A la figure 3, on passe donc du rayon R₂₁ à la droite Δ₂₃ par une rotation R dans le sens trigonométrique inverse. Si la roue tourne en sens inverse, c'est-à-dire dans le sens trigonométrique inverse, la répartition géométrique mentionnée ci-dessus est inversée. Ainsi, avec une vitesse incidente V du jet d'eau analogue à celle envisagée pour la turbine de l'art antérieur.et alors que ce jet est orienté selon la même direction, on peut obtenir, avec une vitesse linéaire U du bord 21 relativement faible, une direction d'incidence du jet d'eau sur le bord d'attaque 21 alignée avec la droite Δ₂₃, comme figuré par la flèche W qui représente, à la figure 3, la vitesse du jet incident dans le référentiel du bord d'attaque.

L'épaisseur e relativement importante de l'aube 2 est telle que, sur sa face d'intrados 24, il existe peu de risque de création de tourbillons.

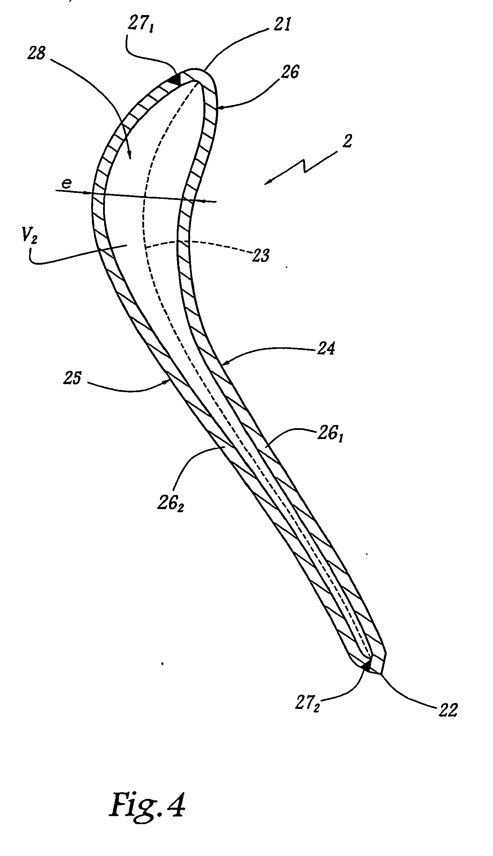

Comme représenté à la figure 4, et compte tenu de son épaisseur e relativement importante, une aube 2 est réalisée avec une peau 26 métallique entourant un volume creux V₂, ce qui permet un gain de poids et de matière appréciable par rapport au cas où l'aube 2 serait prévue mono-bloc et pleine. La peau 26 est formée par soudage de deux plaques de tôle 26₁ et 26₂ au niveau de deux zones de soudage 27₁ et 27₂.

En variante, des plaques de matière composite, comprenant une résine organique chargée en fibres de renfort, peuvent être utilisées pour constituer la peau 26.

Afin de conférer une bonne stabilité dimensionnelle à l'aube 2, le volume V₂ peut être rempli d'une masse 28 de matériau de remplissage, par exemple de mousse de matière plastique.

## Revendications

1. Roue de type Francis comprenant un plafond, une ceinture et des aubes s'étendant entre ledit plafond et ladite ceinture, lesdites aubes définissant entre elles des conduits d'écoulement de liquide, **caractérisée en ce que** le rapport (e/L) de l'épaisseur maximum (e) de chaque aube sur la longueur développée moyenne (L) de sa fibre moyenne (23) est compris entre 0, 1 et 0, 2 et **en ce que**, au niveau du bord d'attaque (21) de chaque aube, ladite fibre moyenne est orienté, sur sensiblement toute la hauteur dudit bord d'attaque, selon une droite (Δ₂₃) faisant un angle (α) supérieur à 90° par rapport à la vitesse linéaire (U) d'avance dudit bord d'attaque dans le sens de rotation de la roue.

2. Roue selon la revendication 1, **caractérisée en ce que** ledit rapport (e/L) est supérieur à 0,13, de préférence à 0,15.

3. Roue selon l'une des revendications précédentes, **caractérisée en ce que** l'angle moyen (α) entre la vitesse linéaire (U) de progression d'une aube (2) au niveau de son bord d'attaque (21) et la fibre moyenne (23) de ladite aube au niveau dudit bord d'attaque est compris entre 110° et 140°.

4. Roue selon l'une des revendications précédentes, **caractérisée en ce que** chaque aube (2) est formée d'une peau (26) constituant les deux faces latérales (24, 25) de ladite aube et définissant un volume interne creux (V₂) de ladite aube.

5. Roue selon la revendication 4, **caractérisée en ce que** ladite peau (26) est métallique.

6. Roue selon la revendication 4, **caractérisée en ce que** ladite peau (26) est réalisée en matière composite.

7. Roue selon l'une des revendications 4 à 6, **caractérisée en ce que** ladite peau (26) est formée par assemblage (27₁, 27₂) de deux plaques (z6₁, 26₂) constituant respectivement l'intrados (24) et l'extrados (25) de ladite aube (2).

8. Roue selon l'une des revendications 4 à 7, **caractérisée en ce que** ledit volume (v₂) est garni d'un matériau de remplissage (28).

9. Turbine hydraulique de type Francis équipée d'une roue (1) selon l'une des revendications précédentes.

## Claims

1. Francis runner which comprises a crown, a band and blades extending between said crown and said band, said blades defining liquid flow channels therebetween, **characterized in that** the ratio (e/L) of the maximum thickness (e) of each blade to the average developed length (L) of its average fibre (23) is included between 0.1 and 0.2, and **in that**, at the level of the leading edge (21) of each blade, said average fibre is oriented, over essentially the entire height of the leading edge, along a straight line (Δ₂₃) forming an angle (α) greater than 90° in relation to the linear speed of advance (U) of said leading edge in the rotating direction of the runner.

2. Runner according to Claim 1, **characterized in that** said ratio (e/L) is greater than 0.13, preferably than 0.15.

3. Runner according to one of the preceding Claims, **characterized in that** the average angle (α) between the linear speed of advance (U) of a blade (2) at the level of its leading edge (21) and the average fibre (23) of said blade at the level of said leading edge is included between 110° and 140°.

4. Runner according to one of the pre ceding Claims, **characterized in that** each blade (2) is formed by a skin (26) constituting the two lateral faces (24, 25) of said blade and defining a hollow internal volume (V₂) of said blade.

5. Runner according to Claim 4, **characterized in that** said skin (26) is metallic.

6. Runner according to Claim 4, **characterized in that** said skin (26) is made of composite material.

7. Runner according to one of Claims 4 to 6, **characterized in that** said skin (26) is formed by assembling (27₁, 27₂) two plates (26₁, 26₂) respectively constituting the pressure side surface (24) and the suction side surface (25) of said blade (2).

8. Runner according to one of Claims 4 to 7, **characterized in that** said volume (V₂) is lined with a filling material (28).

9. Francis hydraulic turbine equipped with a runner (1) according to one of the preceding Claims.

## Patentansprüche

1. Francis-Laufrad mit einer Decke, einer Einfassung und Leitschaufeln, die sich zwischen der Decke und der Einfassung erstrecken, wobei die Leitschaufeln zwischen sich Kanäle für die Strömung einer Flüssigkeit bilden, **dadurch gekennzeichnet, dass** das Verhältnis (e/L) der maximalen Dicke (e) jeder Leitschaufel zu der abgewickelten mittleren Länge (L) ihrer Mittellinie (23) zwischen 0,1 und 0,2 liegt und dass an der Anströmkante (21) jeder Leitschaufel die Mittellinie über im Wesentlichen die gesamte Höhe der Anströmkante gemäß einer Geraden (Δ₂₃) gerichtet ist, die einen Winkel (α) größer als 90° in Bezug auf die lineare Geschwindigkeit (U) des Fortschreitens der Anströmkante in die Drehrichtung des Laufrads einnimmt.

2. Laufrad nach Anspruch 1, **dadurch gekennzeichnet, dass** das Verhältnis (e/L) größer als 0,13, vorzugsweise größer als 0,15 ist.

3. Laufrad nach einem der vorhergehenden Ansprüche, **dadurch gekennzeichnet, dass** der mittlere Winkel (α) zwischen der linearen Geschwindigkeit (U) des Fortschreitens einer Leitschaufel (2) an Ihrer Anströmkante (21) und der Mittellinie (23) des Laufrades an der Anströmkante zwischen 110° und 140° liegt.

4. Laufrad nach einem der vorhergehenden Ansprüche, **dadurch gekennzeichnet, dass** jede Leitschaufel (2) durch eine Schale (26) gebildet wird, die die zwei Seitenflächen (24, 25) der Leitschaufel bildet und ein hohles Innenvolumen (V₂) der Leitschaufel definiert.

5. Laufrad nach Anspruch 4, **dadurch gekennzeichnet, dass** die Schale metallisch Ist.

6. Laufrad nach Anspruch 4, **dadurch gekennzeichnet, dass** die Schale (26) aus einem Verbundmaterial hergestellt ist.

7. Laufrad nach einem der Ansprüche 4 bis 6, **dadurch gekennzeichnet, dass** die Schale (26) durch Zusammenfügen (27₁, 27₂) von zwei Platten (26₁, 26₂) erstellt ist, die jeweils die Druckseite (24) und die Saugseite (25) der Leitschaufel bilden.

8. Laufrad nach einem der Ansprüche 4 bis 7, **dadurch gekennzeichnet, dass** das Volumen (V₂) mit einem Füllmaterial (28) ausgefüllt ist.

9. Hydraulische Francis-Turbine, ausgerüstet mit einem Laufrad (1) nach einem der vorhergehenden Ansprüche.
